# EUROPEAN PATENT SPECIFICATION

(11) **EP 4 333 676 B1**
(45) Date of publication and mention of the grant of the patent: **22.01.2025**
(21) Application number: 22715725.2
(22) Date of filing: 30.03.2022
(51) Int. Cl.: A47J 31/36, A47J 31/44

(54) **EQUIPMENT FOR THE PREPARATION OF BEVERAGES USING CAPSULES CONTAINING A FOOD SUBSTANCE**
VORRICHTUNG ZUR ZUBEREITUNG VON GETRÄNKEN UNTER VERWENDUNG VON KAPSELN MIT EINER LEBENSMITTELSUBSTANZ
ÉQUIPEMENT POUR PRÉPARER DES BOISSONS À L'AIDE DE CAPSULES CONTENANT UNE SUBSTANCE ALIMENTAIRE

(30) Priority: 04.05.2021 IT 202100011378
(43) Date of publication of application: 13.03.2024
(73) Proprietor: Caffitaly System S.P.A., 40041 Gaggio Montano (BO) (IT)
(72) Inventor: TONELLI, Stefano, 40041 Gaggio Montano (BO) (IT); ESPOSITO, Ercole, 40037 Sasso Marconi (BO) (IT)
(74) Representative: Ponchiroli, Simone
(86) International application number: PCT/IB2022/052924
(87) International publication number: WO 2022/234356

(56) References cited:
- WO-A1-2017/134544
- WO-A1-2019/021077
- US-A1- 2016 166 105

## Description

This invention relates to an apparatus for making beverages, of the type which uses capsules containing a food substance.

For a long time now there have been prior art systems for making beverages which comprise an apparatus and capsules to be inserted in the apparatus. The capsules contain the food substances which allow beverages to be made following the interaction with water which, during operation, the apparatus injects into the capsule.

The heart of the apparatus is an extraction unit which defines an extraction chamber in which, in use, the capsule can be inserted. The extraction unit comprises a first part and a second part, at least one of which is movable relative to the other, in such a way that the two parts can adopt a home position, in which they are spaced apart from each other, and an extraction position in which they are coupled to each other.

The extraction chamber is defined between the two parts and is open when the first part and the second part are in the home position, whilst it is closed when the first part and the second part are in the extraction position. When the chamber is open it is possible both to insert in it a new capsule to be used, and to remove a previously used capsule. In contrast, when the chamber is closed, the two parts are capable of clamping between them a capsule whilst suitable beverage making means supply water inside it and cause the beverage formed in this way to come out.

In many apparatuses, the capsule is indirectly fed to the extraction chamber, that is to say, without the user directly accessing the extraction chamber. In particular, this invention relates to those apparatuses in which an infeed section is present at which, in use, a capsule can be fed to the apparatus, and from which a forward movement duct for the capsule extends, which takes the capsule as far as the extraction unit.

**In** particular, in the most widespread apparatuses, the forward movement duct extends vertically, whilst the extraction unit is a so-called horizontal unit, that is to say, a unit in which the movement of the first part and/or of the second part takes place along a substantially horizontal line.

Hereinafter in general reference will be made to apparatuses with a vertical forward movement duct and horizontal unit, but none of those characteristics shall be considered limiting for this invention, which may also be applied in apparatuses with forward movement ducts having different orientation or with extraction units with a different type of movement.

Apparatuses are also split into manually-operated apparatuses, in which the first part and/or the second part is moved manually by the user, usually by means of some type of linkage, and motor-driven apparatuses, in which the first part and/or the second part is moved by a motor activated by an electronic control unit, following an input received from the user.

Although in ways which are partly different, this invention may be applied for both types of apparatus.

**In** recent years, the market has seen the gradual emergence of an increasing number of systems in which the apparatuses are equipped with an electronic device either for detecting only the presence of a capsule, or even for recognising the type of capsule inserted in the apparatus.

This invention relates to the apparatuses in which detecting is performed using an image acquisition device, which is associated with the forward movement duct, and is configured to acquire images of the capsule, when the capsule is inserted in the forward movement duct, or while it moves forward towards the extraction chamber.

**In** some apparatuses, the image acquisition device is connected to an electronic control unit to allow them to detect insertion of a capsule in the apparatus and, following that, to make the apparatus perform one or more actions. For example, the electronic control unit may simply cause the apparatus to wake up from a stand-by state, it may cause the activation of motor-driven elements to allow entry of the capsule in the extraction chamber (for example if along the forward movement duct there is a motor-driven gate element present) or moreover also control the movement of the first part and/or of the second part of the extraction unit.

In some applications, if the apparatus is switched on, the image acquisition device is constantly active, to continuously acquire images, for example to allow the electronic unit to detect insertion of a capsule. A beverage making apparatus comprising an image acquisition device is for example known from WO 2017/134544 A1.

However, the prior art solutions have several disadvantages.

In particular, if the image acquisition device is always operational, given that detection of the presence of the capsule is normally managed by detecting a variation in the acquired image, a variation which is interpreted as corresponding to the appearance of a capsule in the forward movement duct, the considerable disadvantage arises of the apparatus being able to activate for no reason every time something sufficiently interferes with the forward movement duct. Indeed, the image acquisition device is generally positioned near the infeed section, and it may for example be sufficient to carry out a cleaning operation, with a cloth crossing the field of vision of the image acquisition device, to cause the machine to activate. When that happens, for several minutes (the time necessary before the machine automatically returns to the stand-by condition) at least the control panel and the water heating system (boiler) are activated, wasting electricity. The same problem arises if anyone, for example a child, inserts any object inside the forward movement duct.

The problem may be even bigger when false detection of the presence of a capsule also causes subsequent closing of the extraction unit. Indeed, in this case, the apparatus may even become hazardous for the user or for itself. For example, if the activation command is issued following insertion of a finger in the forward movement duct, there is a real possibility that the extraction unit might crush it. Or, if what the electronic processing unit detects the presence of in the images received from the image acquisition device is not actually a capsule, but rather an object which has been accidentally inserted inside the forward movement duct, it may become jammed between and damage the two parts of the unit as the unit closes.

In this context the technical purpose which forms the basis of this invention is to make an apparatus for making beverages, which uses capsules containing a food substance, which overcomes the above-mentioned disadvantages.

In particular the technical purpose of this invention is to make an apparatus for making beverages, which uses capsules containing a food substance, which is less subject to the risk of accidental activation than the prior art apparatuses.

A further technical purpose of this invention is to make an apparatus for making beverages, which uses capsules containing a food substance, which is less hazardous for users and less exposed to risks of damage than the prior art apparatuses.

The technical purpose and the aims indicated are substantially achieved by an apparatus for making beverages, which uses capsules containing a food substance, as described in the appended claims.

Further characteristics and the advantages of this invention will become more apparent from the detailed description of several preferred, non-limiting embodiments of an apparatus for making beverages illustrated in the accompanying drawings, in which:
- Figure 1 is a vertical longitudinal section of an apparatus with horizontal unit according to this invention;
- Figure 2 is a vertical cross-section of the apparatus of Figure 1 sectioned according to the section plane II - II;
- Figure 3 is an enlarged detail from Figure 1, showing the field of vision of an image acquisition device which is part of it;
- Figure 4 is a top view of several parts of what is visible in Figure 3;
- Figure 5 shows, qualitatively, what is seen from the image acquisition device of Figure 3 and 4;
- Figure 6 schematically illustrates an operating mode of an apparatus according to this invention;
- Figure 7 shows several elements from Figure 6 and schematically illustrates a further operating aspect of the apparatus;
- Figures 8 and 9 show, separately and respectively, a first part and a second part of the elements from Figure 7;
- Figure 10 simulates a first operating condition which the elements from Figure 7 can adopt;
- Figure 11 simulates a second operating condition which the elements from Figure 7 can adopt; and
- Figure 12 simulates a third operating condition which the elements from Figure 7 can adopt.

With reference to the above-mentioned figures the numeral 1 denotes in its entirety an apparatus for making beverages according to this invention.

Similarly to many prior art apparatuses, even that according to this invention comprises an extraction unit 2 which defines an extraction chamber 3 in which, in use, a capsule 4 can be inserted. The extraction unit 2 comprises a first part 5 and a second part 6, at least one of which is movable relative to the other between a home position, in which they are spaced apart from each other, and an extraction position, in which they are coupled to each other and close the extraction chamber 3. In accordance with this invention, the first part 5 and/or the second part 6 may be moved either manually or by means of an electric motor.

When the first part 5 and the second part 6 are in the home position, the extraction chamber 3 is open and allows both insertion in it of a new capsule 4 for dispensing, and removal of a previously used capsule 4.

Advantageously, in the known way, associated with the extraction chamber 3 there may be ejecting means (not visible in the accompanying figures) which, automatically, eject the used capsule 4 from the extraction chamber 3, when the first part 5 and the second part 6 pass from the extraction position to the home position.

**In** some embodiments, in the known way, one of either the first part 5 or the second part 6 defines a housing 7, configured to contain the capsule 4 when the first part 5 and the second part 6 are in the extraction position, whilst the other of either the first part 5 or the second part 6 defines a lid configured to close the housing 7.

**In** some embodiments, such as those in which the extraction unit 2 is of the horizontal type, associated with the extraction unit 2 there may also be retaining means 8, configured to retain a new capsule 4 between the first part 5 and the second part 6, when these are in the home position, and to release the capsule 4 inside the extraction chamber 3, when the first part 5 and the second part 6 pass from the home position to the extraction position. Since various types of retaining means 8 are already widely known to experts in the field, they will not be described in further detail herein. Beverage making means 9 are operatively associated with the extraction unit 2. Those means are, in use, configured both to make water circulate through the capsule 4 contained in the closed extraction chamber 3, thereby causing the beverage to be formed, and to dispense the beverage, formed in this way, to the outside of the apparatus 1.

Even the beverage making means 9 are obviously in themselves well known to experts in the field, and therefore will not be described in detail.

As regards feeding of the water into the capsule 4, the beverage making means 9 usually comprise a tank for the water, a pump, a boiler and an element for dispensing the hot water into the capsule 4. **In** the embodiment illustrated, in which the capsule 4 is in itself sealed, the hot water dispensing element advantageously comprises a first piercer 10 intended to pierce the capsule 4 closed in the extraction chamber 3.

In contrast, as regards discharging of the beverage, unless the capsule 4 is configured to dispense the beverage directly into a cup, the beverage making means 9 usually comprise a collecting element, a nozzle for dispensing into a cup (not illustrated in the accompanying figures) and a duct which connects them 11. The collecting element may comprise a second piercer 12 intended to pierce the capsule 4 closed in the extraction chamber 3.

Both the first piercer 10, and the second piercer 12, if they are present, may be fixed or movable, relative to one of the parts of the extraction unit 2 with which they are associated.

The apparatus 1 also comprises an infeed section 13 at which, in use, a capsule 4 can be fed to the apparatus 1, advantageously by the user. Extending between the infeed section 13 and the extraction unit 2 there is a forward movement duct 14 for the capsule 4 in the apparatus 1. Indeed, the capsule 4 moves inside the apparatus 1 along a forward movement path which starts at the infeed section 13, extends inside the forward movement duct 14 as far as the extraction unit 2 and then ends inside the extraction unit 2, in particular at retaining means 8 (if present).

When the first part 5 and the second part 6 are in the extraction position, the forward movement path is interrupted; the capsule 4 can only travel along the entire forward movement path when they are in the home position.

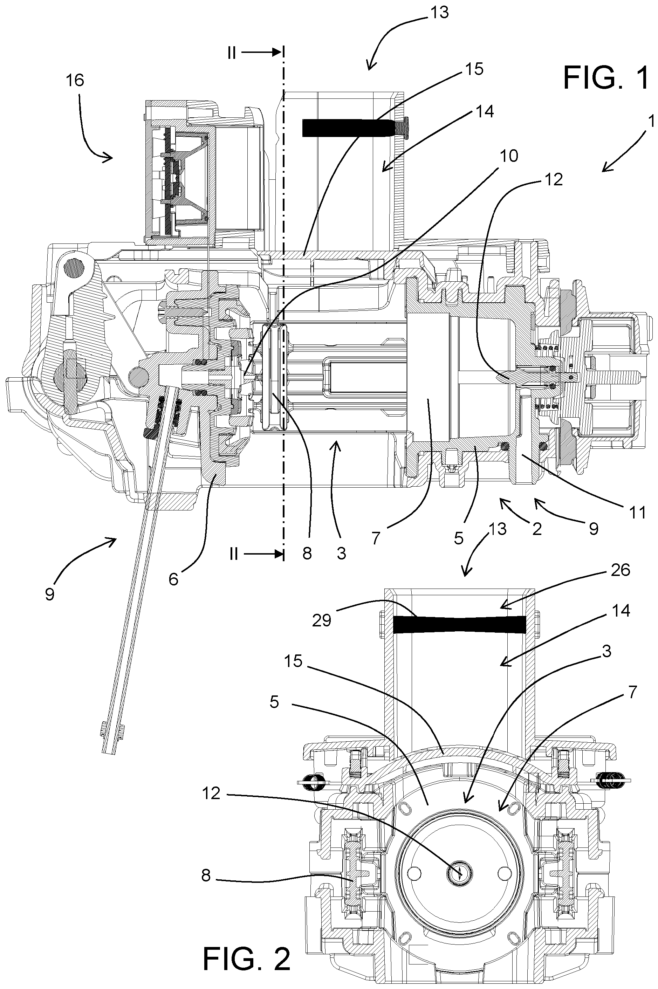

However, in some embodiments, associated with the forward movement path there is at least one movable retaining element 15 for the capsule 4 (in Figure 1 constituted for example of a horizontally movable gate). In some embodiments, the movable element 15 is associated with the movable part which is either the first part 5 or the second part 6, so that it can be moved together with said part at least in some movements. In other embodiments it may, in contrast, be independent of the first part 5 and of the second part 6, and its movement may be independently motor-driven.

In many applications the movable element 15 is intended to prevent access to the extraction unit 2, along the forward movement path, while a beverage is being made, as well as to retain a capsule 4 in a detecting position.

According to this invention, an image acquisition device 16 is associated with the forward movement duct 14 at a transit zone 17 of the forward movement duct 14. Advantageously, the transit zone 17 may be positioned just below the infeed section 13 and/or may be delimited, downstream (relative to the forward movement path), by the movable element 15, which acts as a support for the capsule 4 while the latter is positioned in front of the image acquisition device 16 in such a way as to allow the device to capture images of the capsule in the best possible way.

The image acquisition device 16 is electronic and may comprise an electronic sensor 18 and one or more lenses 19 for focusing and defining the field of vision inside the forward movement duct 14. In particular, the image acquisition device 16 advantageously comprises a digital video camera sensor. Moreover, preferably, the image acquisition device 16 comprises a lighting element (not illustrated) configured to light the predetermined zone, if the transit zone 17 is empty, and the capsule 4, when the capsule 4 is inserted in the transit zone 17.

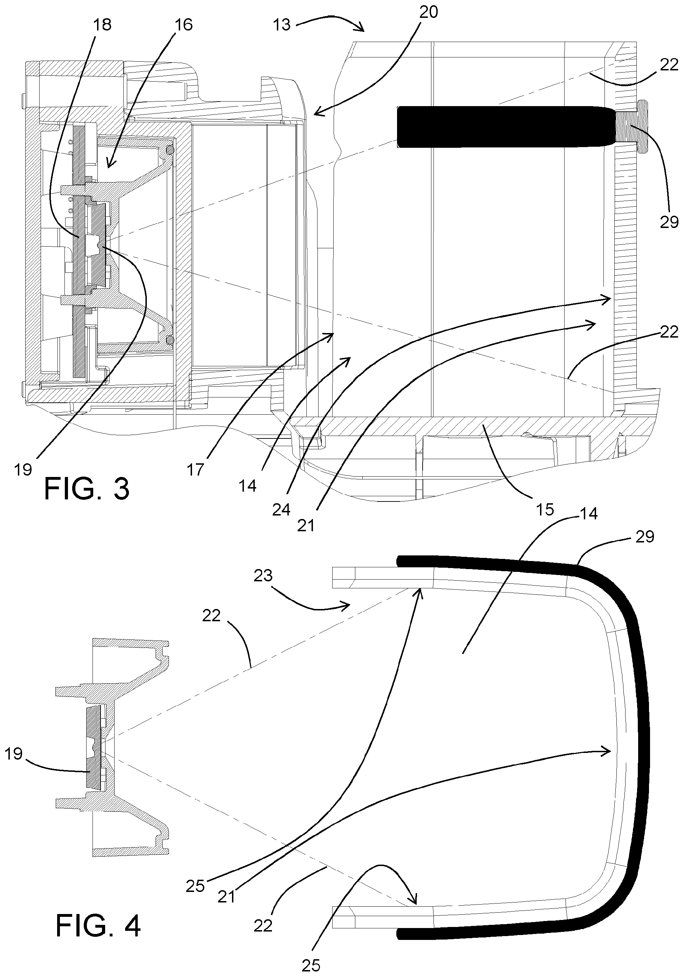

The image acquisition device 16 is configured to acquire digital images inside the forward movement duct 14 at the transit zone 17. The image acquisition device 16 is preferably associated with a first side 20 of the forward movement duct 14 and is facing towards an opposite (facing) second side 21 of the forward movement duct 14. As shown in Figure 3, the image acquisition device 16 may be positioned in a first seat 19 made in the relative first side 20 of the forward movement duct 14.

The image acquisition device 16 has a field of vision 22 which, advantageously, intersects most of the cross-section of the forward movement duct 14, in such a way that it is unlikely that anything can travel through the transit zone 17 without intersecting the field of vision 22 of the image acquisition device 16. In Figures 3 and 4 the limits of the field of vision 22 are schematically shown by lines with long and short dashes.

As can be seen in Figure 4, inside the forward movement duct 14 the blind spots 23 which the image acquisition device 16 is unable to observe are minimised (if one also considers that the two transversal dimensions of the forward movement duct 14 visible in Figure 4 are usually at most equal to a few centimetres, it is clear that the blind spots 23 are very small).

According to this invention, the image acquisition device 16 is positioned in such a way that, when the forward movement duct 14 is empty, it frames a predetermined portion 24 of an inner surface of the forward movement duct 14. In some embodiments the predetermined portion 24 is only located on the second side 21 of the forward movement duct 14. In the preferred embodiments, in which the field of vision 22 is significantly divergent, like that illustrated in the accompanying figures, the predetermined portion 24 in contrast extends both on the second side 21, and on the two further sides 25 of the forward movement duct 14 which are opposite each other, which connect the second side 21 to the first side 20.

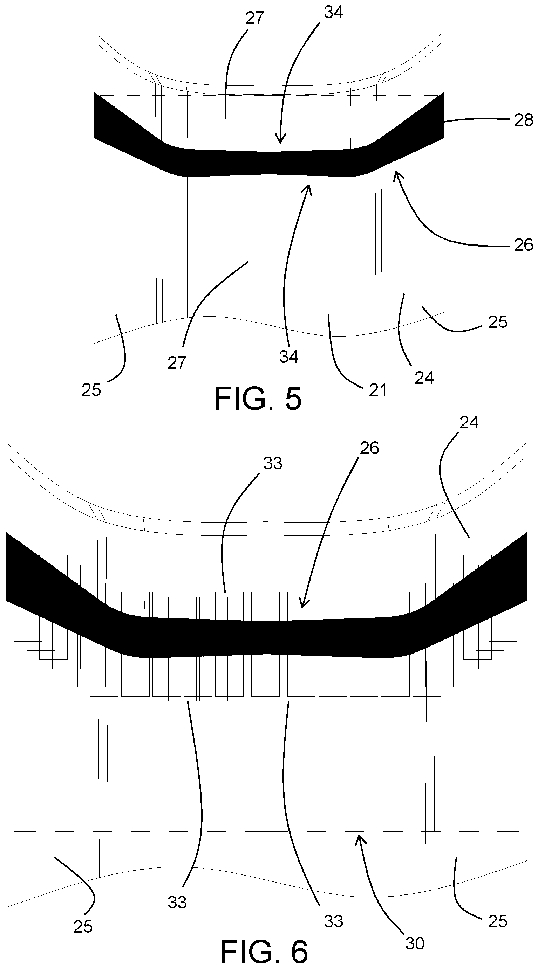

Figure 5 schematically illustrates how the inner surface of the forward movement duct 14 looks, if observed from the viewpoint of the image acquisition device 16. Compared with what is visible in Figure 2 it appears deformed by the perspective effect, but this is not important for the purposes of this invention. In Figures 5-6 and 10-12, the rectangle drawn with a broken line illustrates the limits of the field of vision 22 of the image acquisition device 16 and therefore the edge of the predetermined portion 24 whose images it is capable of acquiring. In contrast, the area of that rectangle represents the image detected by the image acquisition device 16 at a predetermined moment.

In use, the image acquisition device 16 is configured to acquire images in digital format of the transit zone 17 which it sends to an electronic processing unit (not illustrated) connected to it. The electronic processing unit is in turn configured to receive the digital images, and to process them in order to infer information about the presence or absence of capsules in the forward movement duct 14, information which it then uses to control the operation of the apparatus 1, preferably in the ways indicated below. According to an innovative aspect of this invention, at the predetermined portion 24 of the inner surface of the forward movement duct 14, there is a pattern 26 having a known shape present, which is visually recognisable at least in the operating band of frequencies in which the image acquisition device 16 acquires the images. Advantageously, that operating band of frequencies comprises, or is constituted of, that of visible light, and the pattern 26 preferably comprises alternating zones having different colours. In some embodiments the pattern 26 comprises only zones having two colours, preferably with a high contrast compared with each other. In the embodiment illustrated in the accompanying drawings, the pattern 26 comprises two first zones 27 having a first colour separated by a second zone 28 having a second colour. Advantageously, both the first zones 27, and the second zone 28, extend transversally to the forward movement path enough to cover the entire width of the predetermined portion 24. In some applications the first colour and the second colour are one white and the other black.

The pattern 26 can be applied inside the forward movement duct 14 in many different ways: for example by painting, application of a sticker or use of parts made of different colours to make the feed duct. In the embodiment illustrated, an insert 29 having the second colour is inserted in a seat made in the wall of the forward movement duct 14 having the first colour. In the apparatus 1, the insert 29 extends mainly in a plane perpendicular to the forward movement path (horizontal in the accompanying figures) and, observed perpendicularly to that plane, has a C shape.

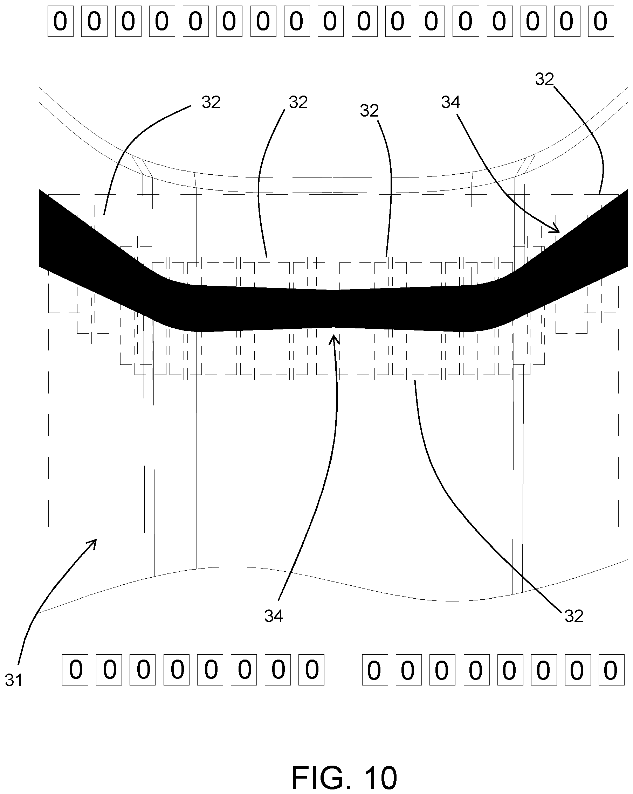

By activating the image acquisition device 16 when the forward movement duct 14 is empty, it is possible to obtain a reference image 30 which shows the predetermined portion 24 observed by the image acquisition device 16. The pattern 26 is therefore visible in the reference image 30, as schematically illustrated in Figure 5 and 10. Advantageously, the pattern 26 is sized in such a way that it covers the entire width of the reference image 30 (which means the dimension of the reference image 30 perpendicular to the forward movement path of the capsule 4).

In some embodiments, when the apparatus 1 is switched on (in stand-by and/or ready to use), the image acquisition device 16 is programmed to acquire images either continuously with a predetermined frequency.

In some embodiments, when the apparatus 1 is switched on, the image acquisition device 16 is programmed to acquire images for a predetermined period of time following an activation command generated by a user or by the electronic processing unit.

In some embodiments, when the apparatus 1 is switched on, the image acquisition device 16 is programmed to acquire one or a plurality of images one after another, following an activation command generated by means of a control device operated, directly or indirectly, by a user.

In some embodiments the control device is a button.

In some embodiments the control device is activated by inserting something (in particular a capsule 4) in the forward movement duct 14, through the infeed section 13. For example, the control device may be a mechanical detecting device, associated with the forward movement duct 14, which is operated when a capsule 4 is inserted, such as that described in patent application WO 2019/021076 A1 to which reference should be made for details.

Hereinafter in this description and in the claims which follow, each image acquired by the image acquisition device 16 and sent to the electronic processing unit will be defined as a first image 31.

In accordance with a further innovative aspect of this invention, the electronic processing unit is programmed both to receive each first image 31 acquired by the image acquisition device 16, and to perform a set of steps for each first image 31 received.

In the more general embodiment, the electronic processing unit is programmed to perform, in order, at least an inspection step, a classification step and a control step.

During the inspection step, the electronic processing unit inspects the first image 31; the result of that inspection is then used as input for the classification step. During the latter, based on the result of the inspection step, the electronic processing unit classifies the first image 31 in one of a plurality of types of images to which the first image 31 could correspond. The various types are selected during electronic processing unit programming, and depend on the type of apparatus 1, and on the type of programming of the electronic processing unit. Each type of images is advantageously selected to correspond to a case which could arise during use of the apparatus 1, as regards what could be found in the transit zone 17. Classifying a first image 31 in a specific type, therefore corresponds to considering that first image 31 to be representative of a specific situation as regards occupation of the transit zone 17 of the feed duct.

In the most simple and common embodiments, there are a first type and a second type. A first image 31 which is classified in the first type is considered to correspond to an image of the transit zone 17 occupied by a capsule 4. In contrast, a first image 31 which is classified in the second type is considered to correspond to an image of the transit zone 17 which is either empty, or is occupied by something other than a capsule 4. However, in some applications a distinction may be made between the case in which the transit zone 17 is occupied by something other than a capsule 4 (third type) and the case in which it is empty (fourth type); when a first image 31 is classified in the fourth type, it is considered to correspond to an image of the transit zone 17 which is empty; the reference image 30 is classifiable in this fourth type. Finally, in the control step, the electronic processing unit controls the operation of the apparatus 1 depending on the result of the classification step, that is to say, depending on what the situation has been considered to be at the transit zone 17 of the forward movement duct 14.

As will already have been understood, when a first image 31 is classified in a particular type, it cannot mean that said first image 31 undoubtedly corresponds to the case to which the type in question corresponds, but only that the image has a set of characteristics (assessed in the inspection step) which are compatible with that classification. **In** other words, during use of the apparatus 1 it is always possible that particular conditions may arise which can result in an incorrect classification.

For example, insertion of an object which is completely transparent to visible light, and having a shape such that it does not create refraction or in any case does not alter the line of propagation of the rays of light which reach the image acquisition device 16, could cause that object to be undetectable in the first image 31 detected and, therefore, the latter might be incorrectly classified as an image corresponding to the case of an empty transit portion. In some embodiments, in qualitative terms, what the electronic processing unit does during the inspection step is to assess how much of the pattern 26 visible in the reference image 30 is also visible in the first image 31. Indeed, if the pattern 26 is completely visible, the first image 31 may be classified as an image of the second or fourth type (transit zone 17 empty), whilst if it is completely hidden, the image may be classified as an image of the forward movement duct 14 occupied by the capsule 4 (first type). **In** intermediate cases, in which the pattern 26 is only partly visible, the image may be classified as an image of a forward movement duct 14 in which something is present, but not a capsule 4 (second or third type).

This result may be achieved with many prior art image processing techniques which may be implemented in electronic processing units.

However, in most applications, the apparatuses for which this invention is intended must be relatively inexpensive, meaning that it is commercially impossible to equip them with electronic processing units having significant processing capacity and which can therefore very quickly run complex algorithms, since such devices would be too expensive.

Consequently, for implementing this invention solutions which can be computationally simpler are preferable.

In some embodiments, during the inspection step, the electronic processing unit is programmed to compare the first image 31 with the reference image 30 and, based on that comparison to consider the pattern 26 fully visible, partly visible or absent in the first image 31.

In contrast, in some preferred embodiments, during the inspection step, the electronic processing unit is programmed to consider the pattern 26 fully visible, partly visible or absent in the first image 31 exclusively based on a processing of the first image 31. The processing to be carried out is selected at the apparatus set-up stage, knowing the characteristics of the reference image 30 (that is to say, in such a way that the processing of the reference image 30 gives the desired result of fully visible pattern).

Then, the information obtained in this way, about how much of the pattern 26 is visible in the first image 31, is used in the classification step to classify the image in one of the plurality of types of images provided.

It should be noticed that in the context of this invention, and of the description and the claims below, the comparison between the first image 31 and the reference image 30 may be performed either starting each time from the reference image 30 saved in digital format, or in contrast starting from reference values previously calculated starting from the reference image 30, and saved in a memory of the electronic processing unit.

In some embodiments the comparison between the first image 31 and the reference image 30 could be performed by comparing the images pixel by pixel, and judging two pixels to be different when one or more of their characteristics differ by more than a predetermined threshold. These characteristics may be the intensity in one or more colour channels or the division of the total intensity into the various colour channels (for colour images, for example RGB), or the intensity of grey (for greyscale images).

In contrast, in other preferred embodiments, the comparison between the first image 31 and the reference image 30 is performed by comparing overall properties of groups of corresponding pixels in each image (the first image 31 and the reference image 30 have the same dimensions and the same resolution). In particular, a plurality of first groups 32 of pixels of the first image 31 is identified, and each of them is compared with a corresponding second group 33 of pixels of the reference image 30.

For each pair constituted of a first group 32 and of a second group 33, each pixel of the first group 32 has a position in the first image 31 which corresponds to the position of a pixel of the second group 33 in the reference image 30 (that is to say, is positioned on the same row and on the same column), and vice versa. The first group 32 and the second group 33 which are compared with each other have the same number of pixels, whilst different first groups 32 may have a different number of pixels.

In contrast, in some preferred embodiments, said electronic processing unit is programmed to, as said, process only the first image 31, without reference to the reference image 30. In this case too, preferably the first image 31 is inspected by inspecting characteristics of first groups 32 of its pixels. This embodiment will be covered in more detail below.

The reference image 30 is advantageously acquired only once during programming of the apparatus 1, which second groups 33 of pixels are to be considered may be decided beforehand; once the second groups 33 of pixels have been decided on, and the coordinates of each pixel of which they consist being known, the electronic processing unit, using those coordinates, can extract corresponding first groups 32 of pixels from each first image 31 that it receives from the image acquisition device 16.

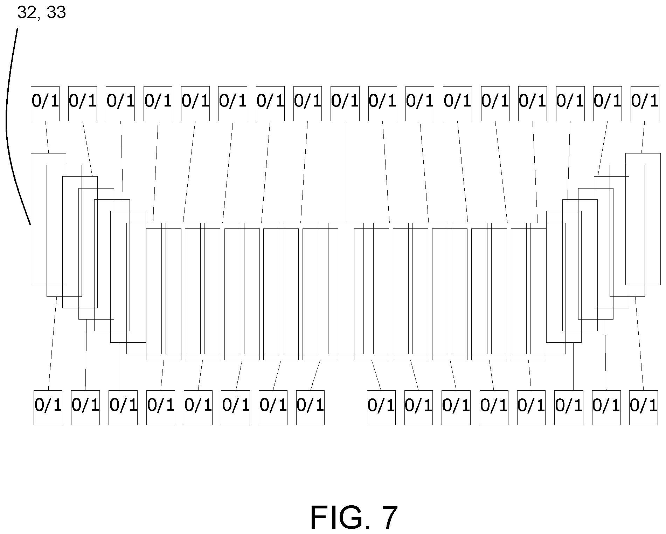

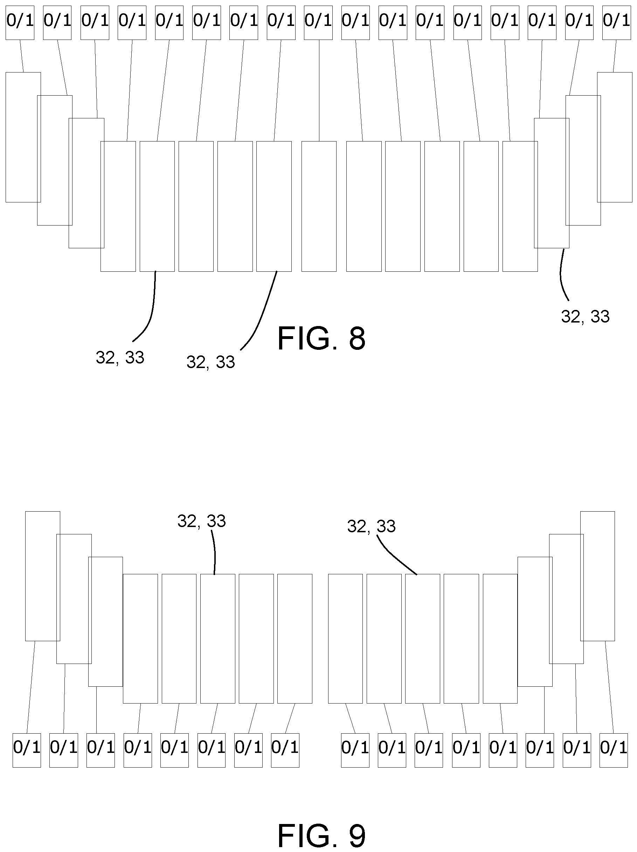

In some embodiments the pixels of each second group 33 are selected adjacent, and are located in a zone of the reference image 30 at which the pattern 26 has a discontinuity 34 of at least some of its characteristics. Advantageously, the pixels of each second group 33 are the pixels of a rectangular area as illustrated for example in Figures 6 to 9. As shown in Figure 6, if the pattern 26 is constituted of a second zone 28 having a second colour which separates two first zones 27 having a first colour, and which extends over the entire width of the reference image 30, each second group 33 of pixels is advantageously constituted of an area which comprises a portion of each part having the first colour and, at the centre, a portion of the element having the second colour. Each transition from one colour to the other constitutes a discontinuity 34.

Moreover, in some embodiments, the second groups 33 of pixels are selected in such a way that at least some of them share a plurality of pixels; that is shown for example in Figures 6 to 9, where each second group 33 of pixels significantly overlaps with two second groups 33 which are alongside it along the line of the width of the image.

In the embodiments in which the first image 31 is inspected in itself, that is to say, without comparing it with the reference image 30, selection of the first groups 32 is in any case advantageously carried out by following the same criteria just described, that is to say, establishing the characteristics of the first groups 32 based on the characteristics of the reference image 30 (that is to say, considering the case in which the first image 31 corresponds to the reference image 30, that is to say, the case in which the transit zone is empty when the first image is acquired).

In some embodiments, the comparison between each first group 32 and the corresponding second group 33, is performed by assigning each of them a score and comparing the two scores with each other. The first group 32 is considered to correspond to the second group 33 when the two scores differ by less than a predetermined deviation.

Each score is calculated using characteristics of the respective group of pixels.

In the case of a comparison between the first groups 32 and the second groups 33, advantageously, the scores of each second group 33 of pixels can also be calculated at the apparatus 1 programming stage, and be saved in the memory of the electronic processing unit; in this way, for each first image 31 to be inspected, the electronic processing unit must calculate the scores only for the first groups 32 of pixels. That can be done using formulas which use values representative of the acquired image.

The scope of application of this invention also includes embodiments, such as that just described, in which the comparison between the first image 31 and the reference image 30 is indirect.

The result of the inspection step based on the comparison, is an assessment of whether or not there is correspondence between each first group 32 and the respective second group 33 (there is correspondence when the two scores differ by less than the predetermined deviation; otherwise there is not). That result may be advantageously expressed and saved by the electronic processing unit in binary format, by associating with each first group 32 of pixels a variable which can adopt the value "0", if there is correspondence, or the value "1", if there is no correspondence. It is evident that nothing changes if the two values are used with inverted meaning, or if other criteria are adopted for saving the correspondence or lack of it between the groups 32, 33 of pixels.

Even in the case in the embodiments in which, in contrast, the first image 31 is inspected in itself, the final result for each group of pixels may advantageously be expressed and saved by the electronic processing unit in binary format, by assigning each first group 32 of pixels a variable which can adopt the value "0" (if the image meets the requirements for considering the first group 32 compatible with an empty transit zone situation) or the value "1" (if that is not the case). The assessment criteria will be selected in such a way that the result is "0" for all of the first groups 32, if the first image 31 corresponds to the reference image 30. In this case too it is evident that nothing changes if the two values are used with inverted meaning, or if other criteria are adopted for saving the result of the inspection step.

In a particularly preferred embodiment, the inspection step may comprise assessment one after another of a set of reference characteristics of the first image 31, each of which changes depending whether the transit zone is empty or occupied by something.

In the embodiment illustrated in the accompanying figures, in which the pattern 26 is constituted of a second zone 28 having a second colour which separates two first zones 27 having a first colour, and which extends over the entire width of the reference image 30, each first group 32 of pixels is advantageously constituted of an area, preferably rectangular, which, in the reference image 30, comprises a portion of each part having the first colour and, at the centre, a portion of the element having the second colour. Inside the area, each transition from one colour to the other constitutes a discontinuity 34.

In some embodiments, the inspection step is performed on each first group 32 by dividing it into N horizontal strips (that is to say, parallel to the width of the reference image 30) having equal height, for example sixteen, and first calculating the average colour intensity of each strip. For example, if the first image 31 is in greyscale, or is converted to greyscale, it is possible to calculate the intensity of grey of each strip. As is known, in a digital image the intensity of grey may be expressed as a value which varies from 0 (black) to 255 (white).

Once the average intensity of grey of each strip has been calculated, the inspection step may comprise a double check.

First, there may be verification that in the sequence of strips (considering them one after another from the bottom upwards or vice versa) there are two discontinuities present, that is to say, a transition from strips which are on average pale to strips which are on average darker, and a subsequent transition from strips which are on average dark to strips which are on average paler (the transition may be clear-cut or gradual). **If** that double transition is present, the method comprises the electronic processing unit being able to consider that the first group 32 may correspond to an image of the transit zone 17 which is empty.

Second, there may be identification of the strip which is on average paler and the strip which is on average darker, and the difference between the respective average intensity of grey values may be calculated, a difference which is then compared with a reference value. Only if the difference is greater than the reference value the method comprises that the first group 32 may be considered to correspond to an image of the transit zone 17 which is empty. Since the reference image 30 shows the empty transit zone 17, the reference value is selected in such a way that said condition is verified for the reference image. For example, in many applications a reference value equal to 50 is the optimum result.

Only when the result of both checks is that the first group 32 may be considered to correspond to an image of the transit zone 17 which is empty, the electronic processing unit assigns that group 32 the classification value "0" (indicating the absence of objects).

Figures 10 to 12 schematically illustrate results obtainable with this approach, in three possible operating conditions.

Figure 10 corresponds to the case of a transit zone 17 which is empty. The pattern 26 is perfectly visible in the first image 31, and in each first group 32 of pixels of the first image 31 there are two discontinuities present; moreover the difference in intensity of grey between the paler strip and the darker strip is greater than the reference value. Each first group 32 of pixels is therefore classified with the value "0" (absence of objects in the area observed).

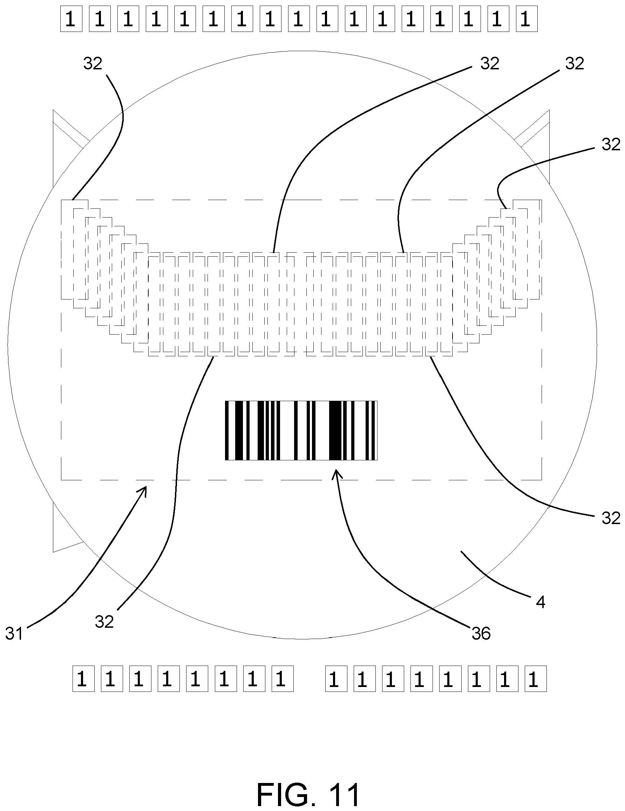

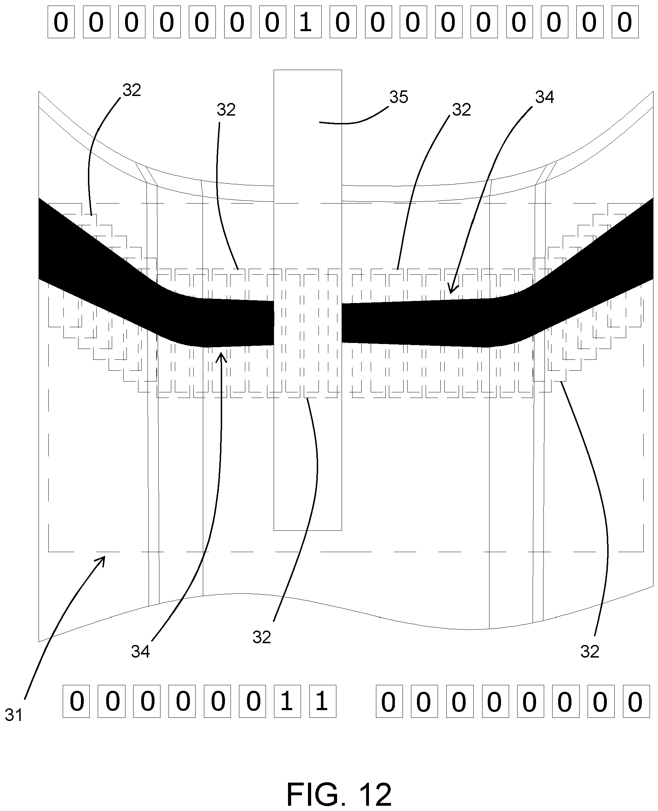

In contrast, Figure 11 corresponds to the case in which a capsule 4 is present in the transit zone 17. In this case, no first group 32 of pixels of the first image 31 corresponds to the relative second group 33 of pixels of the reference image 30, since the pattern 26 is completely hidden by the capsule 4. Therefore, there is no verification together in any first group 32 of the conditions that are presence of the double discontinuity and of a difference in the intensity of grey, between the paler strip and the darker strip, greater than the reference value; each first group 32 is therefore classified with the value "1" (presence of objects in the area observed). Finally, Figure 12 shows the case in which an elongate and pale object 35 is inserted in the transit zone 17 (it could be, for example, a pen or a finger). As can be seen, the pattern 26 is still visible where the object 35 is not present, whilst it is hidden at the object; in particular its discontinuities 34 are hidden and at least one of the colours of which it is composed. Consequently, three first groups 32 of pixels, which overlap with the object in the first image 31, are classified with the value "1", both because the double discontinuity cannot be detected in them, and because in them the difference in intensity of grey between the paler strip and the darker strip is less than the reference value. In contrast, the remaining first groups 32 are classified with the value "0", since they are not affected or are only slightly affected by the presence of the object.

The overall result of the inspection step is the set of all of the classification values assigned to the first groups 32 of the first image 31.

In the case of Figure 10 the result is a set of only "0" values.

In the case of Figure 11 the result is a set of only "1" values.

In the case of Figure 12 the result is a set of both "0" values and "1" values.

In these embodiments, the electronic processing unit is programmed to perform the classification step using as a basis the set of classification values. If the set comprises only "1" values, the first image 31 is classified in the first type; if it comprises only "0" values, the first image 31 is classified in the second type or in the fourth type; if it comprises both "1" values, and "0" values the first image 31 is classified in the second type or in the third type (depending what the specific programming provides for). Obviously the classification step may be performed at the same time as the inspection step and the set of classification values may also correspond to a codification of the type of classification of the first image 31.

Once the classification step has ended, as indicated, the electronic processing unit performs the control step, which may be implemented in many different ways, depending on the embodiments of this invention.

In some embodiments, during the control step the electronic processing unit is programmed to start a cycle for making a beverage only when, during the classification step, it classified the first image 31 in the first type.

The cycle for making the beverage may be started in different ways, depending on the embodiments.

If necessary, the electronic processing unit may, first, switch the apparatus 1 from a stand-by condition to a ready to use condition, activating the boiler to bring it to the correct temperature.

In some cases, the electronic processing unit may issue the command for any movements of the movable element 15, if present, or of the first part 5 and/or of the second part 6 of the unit to allow the capsule 4 to reach the extraction chamber 3 and to clamp it in the extraction chamber 3.

Then, the electronic processing unit may automatically proceed with making the beverage or it may wait for a suitable command from the user (who, for that purpose, will be able to use an interface of the apparatus 1).

In some cases, the electronic processing unit may also be programmed to perform, during the control step and, preferably, at the start of it, a capsule 4 recognition step, which may be intended only to verify that that capsule 4 is usable with the apparatus 1 and/or to recognise what type of capsule 4 it is, in order to adjust the operating parameters of the beverage making means 9 accordingly. If capsule 4 recognition can be performed by analysing graphical elements 36 displayed on the wall of the capsule 4 which passes in front of the image acquisition device 16, when the capsule 4 slides in the forward movement duct 14 (on the top film of the capsule 4 in the case illustrated in Figure 11 in which the graphical element 36 is constituted for example of a bar code), the electronic processing unit may use either the same first image 31 previously used, or a different image acquired by the image acquisition device 16. The result of the recognition step determines the way in which the electronic processing unit controls the subsequent operation of the apparatus 1. Since management of the operation of an apparatus 1 depending on the result of a recognition step is widely known in the sector, it will not be described in detail herein; by way of example reference should be made to what is described in patent applications WO 2017/134544 A1 and WO 2019/021077 A1.

In some embodiments, the electronic processing unit may be programmed to perform the inspection, classification and control steps only when the apparatus 1 is switched on and in a ready to use condition, and the user gives a command to start the cycle for making a beverage.

In that case, the electronic processing unit may activate the image acquisition device 16 so that it acquires a first image 31 of the transit zone 17. The apparatus 1 will be configured in such a way that either a movable element 15, or the extraction unit 2 itself, before the start of the beverage making cycle are positioned in such a way as to hold a capsule 4 which may have been inserted in the feed duct stationary at the transit zone 17, so that the image acquisition device 16 can capture an image of it.

Only once the inspection and classification steps have resulted in classification of the first image 31 in the first type, the electronic unit is programmed to make the beverage making cycle continue, similarly to what was already described above (including recognition of the capsule 4 if necessary).

In all of these embodiments, when, in the classification step, the first image 31 has been classified in a type other than the first type (in the second type or in one of either the third or the fourth), the electronic unit is in contrast programmed to not start the beverage making cycle and, advantageously, to prevent activation of the boiler or movements by movable parts of the apparatus 1 (such as the first part 5 and/or the second part 6 or the movable element 15). Moreover, advantageously, the electronic control unit is programmed to reset the programming to make it restart with a new first image 31.

In some embodiments, it may be the case that, when the apparatus 1 is in a stand-by condition, the image acquisition device 16 acquires first images continuously, with a predetermined frequency, and sends them one after another to the electronic processing unit. For each first image 31 that it receives the electronic processing unit performs all of the steps for which it is programmed.

First, it performs the inspection and classification steps and classifies the first image 31 in one of the required types. When the electronic processing unit classifies a first image 31 in the first type, during the subsequent control step it switches the apparatus 1 from the stand-by condition to the ready to use condition, activating what is necessary (for example starting the heating of the boiler), and starts or enables the cycle for making the beverage.

In contrast, when it classifies the first image 31 in another type, in the control step it does not perform any action and moves on to analysis of the next first image 31.

In a preferred embodiment, the apparatus 1 according to this invention is an apparatus 1 in which the extraction unit 2 is motor-driven and is of the horizontal type, and in which activation of the image acquisition device 16 is controlled by a control device associated with the forward movement duct 14, which is operated when a capsule 4 is inserted in the transit zone 17, in particular a control device according to what is described in the already mentioned patent application WO 2019/021076 A1, to which reference should be made for details. Advantageously, each activation of the control device corresponds to the acquisition of an image.

Furthermore, the capsule 4 is retained at the transit zone 17 either by the extraction unit 2 itself or by a motor-driven movable element 15 (also meaning that the movable element 15 may be moved by the motor-driven extraction unit 2).

Moreover, in the preferred embodiment, the electronic processing unit is programmed to operate the movable element 15 or the extraction unit 2, so as to allow forward movement of the capsule 4 from the transit zone 17 to the extraction chamber 3, only when, at the end of the classification step, a first image 31 has been classified in the first type, whilst it is programmed to do nothing, other than prepare to perform a new inspection step upon receiving the next first image 31, every time a first image 31 is classified in a type other than the first type.

Moreover, preferably, the electronic processing unit is also programmed to perform the capsule 4 recognition procedure using the first image 31 classified in the first type, even for searching on the capsule 4 for a graphical element 36 which identifies the capsule 4 itself, and for dispensing the beverage using saved dispensing parameters, which are associated with the graphical element 36.

Depending on the embodiments, the beverage making procedure may proceed completely automatically or it may require input by the user.

This invention brings important advantages.

Thanks to this invention, first it was possible to make an apparatus for making beverages, which uses capsules containing a food substance, which is much less subject to the risk of accidental activation than similar prior art apparatuses.

Second, it was possible to define an apparatus for making beverages, which uses capsules containing a food substance, which is less hazardous for users and less exposed to risks of damage than similar prior art apparatuses.

Finally, it should be noticed that this invention is relatively easy to produce and that even the cost linked to implementing the invention is not very high. The invention described above may be modified and adapted in several ways without thereby departing from the scope of the invention which is defined by the appended claims.

All details may be substituted with other technically equivalent elements and the materials used, as well as the shapes and dimensions of the various components, may vary according to requirements.

## Claims

1. An apparatus for making beverages, which uses capsules containing a food substance, comprising:
an extraction unit (2) which defines an extraction chamber (3) in which, in use, a capsule (4) can be inserted, the extraction unit (2) in turn comprising a first part (5) and a second part (6), the first part (5) and the second part (6) being movable, at least one relative to the other, between a home position in which they are spaced apart from each other, and in which the extraction chamber (3) is open to allow insertion of a capsule (4) in it, and an extraction position in which they are coupled to each other and close the extraction chamber (3);
an infeed section (13) at which, in use, a capsule (4) can be fed to the apparatus (1), a forward movement duct (14) for the capsule (4) in the apparatus (1) extending between the infeed section (13) and the extraction unit (2);
means for making a beverage for, in use, making hot water circulate through the capsule (4) contained in the closed extraction chamber (3), thereby causing the beverage to be formed, and for dispensing the beverage to the outside of the apparatus (1);
an image acquisition device (16) associated with the forward movement duct (14), at a transit zone (17) of the forward movement duct (14), and configured to acquire digital images inside the forward movement duct (14) at the transit zone (17); and
an electronic processing unit connected to the image acquisition device (16) for receiving and processing the digital images acquired by it;
wherein moreover:
the image acquisition device (16) is associated with a first side (20) of the forward movement duct (14) and is facing towards a second side (21) of the forward movement duct (14) opposite the first side (20), the image acquisition device (16) being positioned in such a way that it frames a predetermined portion (24) of an inner surface of the forward movement duct (14), when the forward movement duct (14) is empty; and
a pattern (26) having a known shape is present in said predetermined portion (24), the pattern (26) being visually recognisable at least in an operating band of frequencies in which the image acquisition device (16) acquires the images, in such a way that the pattern (26) is visible in a reference image (30) acquired when the forward movement duct (14) is empty;
and wherein, in use, the electronic processing unit is programmed to receive a first image (31) acquired by the image acquisition device (16), and to perform the following steps:
an inspection step, during which the processing unit inspects the first image (31);
a classification step, in which based on the result of the inspection step, the electronic processing unit classifies the first image (31) in one of a plurality of types of images, where the plurality of types of images comprises at least a first type which is considered to correspond to an image of the transit zone (17) occupied by a capsule (4), and a second type which is considered to correspond to an image of the transit zone (17) which is empty or occupied by something other than a capsule (4); and
a control step, in which the electronic processing unit controls the operation of the apparatus (1) depending on the result of the classification step.

2. The apparatus according to claim 1 wherein the second type is divided into a third type which is considered to correspond to an image of the transit zone (17) occupied by something other than a capsule (4), and a fourth type which is considered to correspond to an image of the transit zone (17) which is empty.

3. The apparatus according to any one of claims 1 to 2 wherein the electronic processing unit is programmed to prevent movements by movable parts of the apparatus (1) when, during the inspection step, it classified the first image (31) in the second type.

4. The apparatus according to any one of claims 1 to 3 wherein, during the inspection step, the electronic processing unit is programmed:
to compare characteristics of the first image (31) with corresponding reference characteristics;
based on that comparison to consider the pattern (26) fully visible, partly visible or absent in the first image (31);
to classify the image in one of said plurality of types of images based on how much of the pattern (26) has been considered visible in the first image (31).

5. The apparatus according to claim 4 wherein the electronic processing unit is programmed to compare the characteristics of the first image (31) with corresponding reference characteristics, for each of a plurality of first groups (32) of pixels of the first image (31).

6. The apparatus according to claim 5 wherein during the comparison step with regard to each first group (32) the electronic processing unit is programmed to verify the presence of a predefined number of colour variations within the first group (32) of pixels, and/or to verify that present among the pixels of the first group (32) there is a difference in colour intensity which is greater than a reference value.

7. The apparatus according to claim 5 or 6 wherein the pixels of each first group (32) are selected adjacent and positioned at a zone of the reference image (30) at which the pattern (26) has at least one discontinuity (34) of at least some of its characteristics.

8. The apparatus according to claim 5, 6 or 7 wherein the first groups (32) are predefined and selected in such a way that at least some of them share a plurality of pixels.

9. The apparatus according to any one of claims 4 to 8 wherein the pattern (26) comprises two first zones (27) having a first colour which are separated by a second zone (28) having a second colour, which extend transversally to a forward movement path which goes from the infeed section (13) to the extraction chamber (3) and which cover an entire width of the predetermined portion (24), and wherein each first group (32) of pixels extends parallel to the forward movement path and, in the reference image (30) contains a part of each first zone (27) and of the second zone (28).

10. The apparatus according to any one of claims 1 to 3 wherein the electronic processing unit is programmed to perform the inspection step by directly or indirectly comparing the first image (31) with the reference image (30).

11. The apparatus according to claim 10 wherein, during the inspection step, the electronic processing unit is programmed:
to compare characteristics of the first image (31) with corresponding characteristics of the reference image (30);
based on that comparison to consider the pattern (26) fully visible, partly visible or absent in the first image (31);
to classify the image in one of said plurality of types of images based on how much of the pattern (26) has been considered visible in the first image (31).

12. The apparatus according to claim 11 wherein the comparison between the first image (31) and the reference image (30) is performed by comparing each of a plurality of first groups (32) of pixels of the first image (31), with a second group (33) of pixels of the reference image (30), where, for each first group (32), each pixel of the first group (32) has a position within the first image (31) which corresponds to the position of a pixel of a corresponding second group (33) of pixels in the reference image (30), and vice versa.

13. The apparatus according to claim 12 wherein the comparison between each first group (32) and each second group (33), is performed by assigning each of them a score calculated using characteristics respectively of the first group (32) of pixels and of the second group (33) of pixels, comparing the scores calculated in this way with each other and considering that the two scores coincide when they differ by less than a predetermined deviation.

14. The apparatus according to claim 12 or 13 wherein the pixels of each second group (33) are selected adjacent and positioned at a zone of the reference image (30) at which the pattern (26) has at least one discontinuity (34) of at least some of its characteristics.

15. The apparatus according to claim 12, 13 or 14 wherein the second groups (33) are predefined and selected in such a way that at least some of them share a plurality of pixels.

16. The apparatus according to any one of claims 1 to 15, wherein in the control step, the electronic processing unit is programmed to start or to enable a cycle for making a beverage only when, during the classification step, it classified the first image (31) in the first type.

17. The apparatus according to any one of claims 1 to 15, wherein, when the apparatus (1) is switched on and in a stand-by condition and/or ready to use, the image acquisition device (16) acquires first images continuously, with a predetermined frequency, and sends them to the electronic processing unit, which, for each first image (31), performs the inspection and classification steps, and wherein, when the electronic processing unit classifies a first image (31) in the first type, during the subsequent control step it switches the apparatus (1) to a ready to use condition and starts or enables a cycle for making a beverage.

18. The apparatus according to any one of claims 1 to 16, also comprising a control device which can be operated, directly or indirectly, by a user, and wherein, when the apparatus (1) is switched on, the image acquisition device (16) is programmed to acquire one or a plurality of images one after another following an activation command generated by the control device.

19. The apparatus according to any one of claims 1 to 17, wherein, when in the classification step it classified the first image (31) in the first type, during the subsequent control step the electronic processing unit is also programmed to perform a capsule (4) recognition step, using the first image (31) used for the inspection step or a different image acquired by the image acquisition device (16), and to control the operation of the apparatus (1) depending on the result of the recognition step.

## Patentansprüche

1. Eine Vorrichtung zur Zubereitung von Getränken, die Kapseln, die eine Lebensmittelsubstanz enthalten, verwendet, Folgendes beinhaltend:
eine Extraktionseinheit (2), die eine Extraktionskammer (3) definiert, in die im Gebrauch eine Kapsel (4) eingesetzt werden kann, die Extraktionseinheit (2) beinhaltet dabei ihrerseits einen ersten Teil (5) und einen zweiten Teil (6), der erste Teil (5) und der zweite Teil (6) sind dabei, zumindest der eine im Verhältnis zum anderen, zwischen einer Grundstellung, in der sie in einem Abstand voneinander sind, und in der die Extraktionskammer (3) offen ist, um das Einsetzen einer Kapsel (4) in sie zu erlauben, und einer Extraktionsposition, in der sie miteinander verbunden sind und die Extraktionskammer (3) schließen, beweglich;
einen Zuführungsabschnitt (13), in dem im Gebrauch der Vorrichtung (1) eine Kapsel (4) zugeführt werden kann, einen Vorwärtsbewegungskanal (14) für die Kapsel (4) in die Vorrichtung (1), der sich zwischen dem Zuführungsabschnitt (13) und der Extraktionseinheit (2) erstreckt;
Mittel zur Zubereitung eines Getränks, um im Gebrauch heißes Wasser dazu zu bringen, durch die Kapsel (4), die in der geschlossenen Extraktionskammer (3) enthalten ist, zu zirkulieren, dabei die Bildung des Getränks verursachend, und zur Ausgabe des Getränks außerhalb der Vorrichtung (1); ein Bildaufnahmegerät (16),
das mit dem Vorwärtsbewegungskanal (14) verbunden ist, in einem Transitbereich (17) des Vorwärtsbewegungskanals (14), und beschaffen, um digitale Bilder im Vorwärtsbewegungskanal (14) im Transitbereich (17) aufzunehmen; und
eine elektronische Verarbeitungseinheit, die mit dem Bildaufnahmegerät (16) verbunden ist, um die von diesem aufgenommenen digitalen Bilder zu empfangen und zu verarbeiten; wobei außerdem:
das Bildaufnahmegerät (16) mit einer ersten Seite (20) des Vorwärtsbewegungskanals (14) verbunden ist und zu einer zweiten Seite (21) des Vorwärtsbewegungskanal (14) gegenüber der ersten Seite (20) gerichtet ist, das Bildaufnahmegerät (16) ist dabei so positioniert, dass es einen vorher festgelegten Abschnitt (24) einer Innenfläche des Vorwärtsbewegungskanals (14) im Bild erfasst, wenn der Vorwärtsbewegungskanal (14) leer ist; und
ein Muster (26), das dabei eine bekannte Form hat, in besagtem vorher festgelegtem Abschnitt (24) vorhanden ist, das Muster (26) ist dabei visuell erkennbar, zumindest in einem Betriebsband von Frequenzen, in dem das Bildaufnahmegerät (16) die Bilder aufnimmt, solcherart, dass das Muster (26) in einem Bezugsbild (30) sichtbar ist, das erfasst wird, wenn der Vorwärtsbewegungskanal (14) leer ist;
und wobei im Gebrauch die elektronische Verarbeitungseinheit dazu programmiert ist, ein erstes Bild (31), das vom Bildaufnahmegerät (16) aufgenommen wurde, zu empfangen, und folgende Schritte durchzuführen:
einen Prüfschritt, während dessen die Verarbeitungseinheit das erste Bild (31) überprüft;
einen Klassifizierungsschritt, bei dem die elektronische Verarbeitungseinheit auf der Grundlage des Ergebnisses des Prüfschritts das erste Bild (31) in eine aus einer Mehrzahl von Arten von Bildern einstuft, wobei die Mehrzahl von Arten von Bildern mindestens eine erste Art beinhaltet, die als einem Bild des Transitbereichs (17), der von einer Kapsel (4) belegt ist, entsprechend aufgefasst wird, und eine zweite Art, die als einem Bild des Transitbereichs (17), der leer ist oder von etwas anderem als der Kapsel (4) belegt ist, entsprechend aufgefasst wird; und
einen Steuerungsschritt, bei dem die elektronische Verarbeitungseinheit den Betrieb der Vorrichtung (1) abhängend vom Ergebnis des Klassifizierungsschritts steuert.

2. Die Vorrichtung nach dem Patentanspruch 1, wobei die zweite Art in eine dritte Art, die als einem Bild des Transitbereichs (17) entsprechend aufgefasst wird, der von etwas anderem als der Kapsel (4) belegt ist, und einer vierten Art, die als einem Bild des Transitbereichs (17), der leer ist, entsprechend aufgefasst wird, aufgeteilt ist.

3. Die Vorrichtung nach jedem der Patentansprüche 1 bis 2, wobei die elektronische Verarbeitungseinheit dazu programmiert ist, Bewegungen von beweglichen Teilen der Vorrichtung (1) zu verhindern, wenn sie, während des Prüfschritts, das erste Bild (31) in die zweite Art eingestuft hat.

4. Die Vorrichtung nach jedem der Patentansprüche 1 bis 3, wobei, während des Prüfschritts, die elektronische Verarbeitungseinheit zu Folgendem programmiert ist:
Merkmale des ersten Bilds (31) mit entsprechenden Bezugsmerkmalen zu vergleichen;
auf der Grundlage dieses Vergleichs das Muster (26) im ersten Bild (31) als komplett sichtbar, teilweise sichtbar oder nicht vorhanden aufzufassen;
das Bild in eine der besagten Mehrzahl von Arten einzustufen, auf der Grundlage dessen, wie viel des Musters (26) im ersten Bild (31) als sichtbar aufgefasst wurde.

5. Die Vorrichtung nach dem Patentanspruch 4, wobei die elektronische Verarbeitungseinheit dazu programmiert ist, die Merkmale des ersten Bilds (31) mit entsprechenden Bezugsmerkmalen zu vergleichen, für jede einer Mehrzahl von ersten Gruppen (32) von Pixeln des ersten Bilds (31).

6. Die Vorrichtung nach dem Patentanspruch 5, wobei während des Vergleichsschritts mit Bezug auf jede erste Gruppe (32) die elektronische Verarbeitungseinheit dazu programmiert ist, das Vorhandensein einer vorher festgelegten Anzahl von Farbvariationen innerhalb der ersten Gruppe (32) von Pixeln zu überprüfen und/oder zu überprüfen, ob zwischen den Pixeln der ersten Gruppe (32) ein Unterschied in der Farbintensität besteht, der größer als ein Bezugswert ist.

7. Die Vorrichtung nach dem Patentanspruch 5 oder 6, wobei die Pixel jeder ersten Gruppe (32) nebeneinander liegend und sich in einem Bereich des Bezugsbilds (30) befindend, in dem das Muster (26) mindestens eine Diskontinuität (34) von mindestens einigen seiner Merkmale aufweist, ausgewählt werden.

8. Die Vorrichtung nach dem Patentanspruch 5, 6 oder 7, wobei die ersten Gruppen (32) vorher festgelegt und solcherart ausgewählt sind, dass mindestens einige von ihnen eine Mehrzahl von Pixeln miteinander teilen.

9. Die Vorrichtung nach jedem der Patentansprüche 4 bis 8, wobei das Muster (26) zwei erste Bereiche (27) beinhaltet, die dabei eine erste Farbe haben, die durch einen zweiten Bereich (28) getrennt sind, der dabei eine zweite Farbe hat, die sich transversal zu einer Vorwärtsbewegungsbahn erstrecken, die vom Zuführungsbereich (13) zur Extraktionskammer (3) verläuft, und die eine gesamte Breite des vorher festgelegten Abschnitts (24) einnehmen, und wobei sich jede erste Gruppe (32) von Pixeln parallel zur Vorwärtsbewegungsbahn erstreckt und im Bezugsbild (30) einen Teil jedes ersten Bereichs (27) und des zweiten Bereichs (28) beinhaltet.

10. Die Vorrichtung nach jedem der Patentansprüche 1 bis 3, wobei die elektronische Verarbeitungseinheit dazu programmiert ist, den Prüfschritt durchzuführen, indem sie das erste Bild (31) direkt oder indirekt mit dem Bezugsbild (30) vergleicht.

11. Die Vorrichtung nach dem Patentanspruch 10, wobei, während des Prüfschritts, die elektronische Verarbeitungseinheit zu Folgendem programmiert ist:
Merkmale des ersten Bilds (31) mit entsprechenden Merkmalen des Bezugsbilds (31) zu vergleichen;
auf der Grundlage dieses Vergleichs das Muster (26) im ersten Bild (31) als komplett sichtbar, teilweise sichtbar oder nicht vorhanden aufzufassen;
das Bild in eine besagte Mehrzahl von Bildern einzustufen, auf der Grundlage davon, wie viel des Musters (26) im ersten Bild (31) als sichtbar aufgefasst wurde.

12. Die Vorrichtung nach dem Patentanspruch 11, wobei der Vergleich zwischen dem ersten Bild (31) und dem Bezugsbild (30) durchgeführt wird, indem jede einer Mehrzahl von ersten Gruppen (32) von Pixeln des ersten Bilds (31) mit einer zweiten Gruppe (33) von Pixeln des Bezugsbilds (30) verglichen wird, wobei, für jede erste Gruppe (32), jedes Pixel der ersten Gruppe (32) eine Position innerhalb des ersten Bilds (31) hat, die der Position eines Pixels einer entsprechenden zweiten Gruppe (33) von Pixeln im Bezugsbild (30) entspricht und umgekehrt.

13. Die Vorrichtung nach dem Patentanspruch 12, wobei der Vergleich zwischen jeder ersten Gruppe (32) und jeder zweiten Gruppe (33) durchgeführt wird, indem jeder von ihnen eine Punktzahl zugewiesen wird, die unter Verwendung von Merkmalen jeweils der ersten Gruppe (32) von Pixeln und der zweiten Gruppe (33) von Pixeln berechnet wird, wobei die solcherart berechneten Punktzahlen miteinander verglichen werden und die zwei Punktzahlen als übereinstimmend aufgefasst werden, wenn sie sich um weniger als eine vorher festgelegte Abweichung voneinander unterscheiden.

14. Die Vorrichtung nach dem Patentanspruch 12 oder 13, wobei die Pixel jeder zweiten Gruppe (33) nebeneinander liegend und sich in einem Bereich des Bezugsbilds (30) befindend ausgewählt werden, in dem das Muster (26) mindestens eine Diskontinuität (34) mindestens einiger seiner Merkmale aufweist.

15. Die Vorrichtung nach dem Patentanspruch 12, 13 oder 14, wobei die zweiten Gruppen (33) vorher festgelegt und solcherart ausgewählt sind, dass mindestens einige von ihnen eine Mehrzahl von Pixeln miteinander teilen.

16. Die Vorrichtung nach jedem der Patentansprüche 1 bis 15, wobei beim Steuerungsschritt die elektronische Verarbeitungseinheit dazu programmiert ist, einen Zyklus zur Zubereitung eines Getränks nur dann zu starten oder freizugeben, wenn sie während des Klassifizierungsschritts das erste Bild (31) in die erste Art eingestuft hat.

17. Die Vorrichtung nach jedem der Patentansprüche 1 bis 15, wobei, wenn die Vorrichtung (1) eingeschaltet ist und sich im Stand-by-Betrieb befindet und/oder gebrauchsbereit ist, das Bildaufnahmegerät (16) kontinuierlich, mit einer vorher festgelegten Frequenz, erste Bilder aufnimmt und sie an die elektronische Verarbeitungseinheit sendet, die für jedes erste Bild (31) den Prüfschritt und den Klassifizierungsschritt durchführt, und wobei, wenn die elektronische Verarbeitungseinheit ein erstes Bild (31) in die erste Art einstuft, sie während des folgenden Prüfschritts die Vorrichtung (1) in einen gebrauchsbereiten Zustand umschaltet und einen Zyklus zur Zubereitung eines Getränks startet oder freigibt.

18. Die Vorrichtung nach jedem der Patentansprüche 1 bis 16, auch eine Steuerungsvorrichtung beinhaltend, die direkt oder indirekt von einem Nutzer betrieben werden kann und wobei, wenn die Vorrichtung (1) eingeschaltet ist, das Bildaufnahmegerät (16) dazu programmiert ist, infolge eines Aktivierungsbefehls, der von der Steuerungsvorrichtung erzeugt wurde, ein Bild oder eine Mehrzahl von Bildern nacheinander aufzunehmen.

19. Die Vorrichtung nach jedem der Patentansprüche 1 bis 17, wobei, wenn sie beim Klassifizierungsschritt das erste Bild (31) in die erste Art eingestuft hat, die elektronische Verarbeitungseinheit während des folgenden Steuerungsschritts auch dazu programmiert ist, einen Erkennungsschritt der Kapsel (4) durchzuführen, indem sie das erste Bild (31), das für den Prüfschritt verwendet wurde, oder ein anderes Bild, das vom Bildaufnahmegerät (16) aufgenommen wurde, verwendet, und dazu, den Betrieb der Vorrichtung (1) vom Ergebnis des Erkennungsschritt abhängend zu steuern.

## Revendications

1. Un appareil pour la préparation de boissons, qui utilise des capsules contenant une substance alimentaire, comprenant :
une unité d'extraction (2) qui définit une chambre d'extraction (3) dans laquelle, en utilisation, une capsule (4) peut être insérée, l'unité d'extraction (2) comprenant à son tour une première partie (5) et une deuxième partie (6), la première partie (5) et la deuxième partie (6) étant mobiles, au moins l'une par rapport à l'autre, entre une position de repos dans laquelle elles sont espacées l'une de l'autre, et dans laquelle la chambre d'extraction (3) est ouverte pour permettre l'insertion d'une capsule (4) à l'intérieur, et une position d'extraction dans laquelle elles sont accouplées l'une avec l'autre et ferment la chambre d'extraction (3) ;
une section d'entrée (13) au niveau de laquelle, en utilisation, une capsule (4) peut être alimentée à l'appareil (1), un conduit d'avance (14) de la capsule (4) dans l'appareil (1) s'étendant entre la section d'entrée (13) et l'unité d'extraction (2) ;
des moyens de préparation d'une boisson pour, en utilisation, faire circuler de l'eau chaude à travers la capsule (4) contenue dans la chambre d'extraction (3) fermée, causant ainsi la formation de la boisson, et pour distribuer la boisson à l'extérieur de l'appareil (1) ;
un dispositif d'acquisition d'images (16) associé avec le conduit d'avance (14), au niveau d'une zone de transit (17) du conduit d'avance (14), et configuré pour acquérir des images numériques à l'intérieur du conduit d'avance (14) au niveau de la zone de transit (17) ; et
une unité électronique de traitement reliée au dispositif d'acquisition d'images (16) pour recevoir et traiter les images numériques acquises par celui-ci ;
dans lequel en outre :
le dispositif d'acquisition d'images (16) est associé avec un premier côté (20) du conduit d'avance (14) et est orienté vers un deuxième côté (21) du conduit d'avance (14) opposé au premier côté (20), le dispositif d'acquisition d'images (16) étant positionné de manière à ce qu'il cadre une portion prédéterminée (24) d'une surface intérieure du conduit d'avance (14), lorsque le conduit d'avance (14) est vide ; et
un motif (26) ayant une forme connue est présent dans ladite portion prédéterminée (24), le motif (26) étant visuellement reconnaissable au moins dans une bande de fréquences de travail dans laquelle le dispositif d'acquisition d'images (16) acquiert les images, de manière à ce que le motif (26) soit visible dans une image de référence (30) acquise lorsque le conduit d'avance (14) est vide ;
et dans lequel, en utilisation, l'unité électronique de traitement est programmée pour recevoir une première image (31) acquise par le dispositif d'acquisition d'images (16), et pour effectuer les étapes suivantes :
une étape d'inspection, au cours de laquelle l'unité de traitement inspecte la première image (31) ;
une étape de classification, au cours de laquelle, sur la base du résultat de l'étape d'inspection, l'unité électronique de traitement classifie la première image (31) dans un d'une pluralité de types d'images, où la pluralité de types d'images comprend au moins un premier type qui est considéré comme correspondant à une image de la zone de transit (17) occupée par une capsule (4), et un deuxième type qui est considéré comme correspondant à une image de la zone de transit (17) qui est vide ou occupée par quelque chose d'autre qu'une capsule (4) ; et une étape de contrôle, dans laquelle l'unité électronique de traitement contrôle le fonctionnement de l'appareil (1) en fonction du résultat de l'étape de classification.

2. L'appareil selon la revendication 1, dans lequel le deuxième type est divisé en un troisième type qui est considéré comme correspondant à une image de la zone de transit (17) occupée par quelque chose d'autre qu'une capsule (4), et un quatrième type qui est considéré comme correspondant à une image de la zone de transit (17) qui est vide.

3. L'appareil selon l'une quelconque des revendications de 1 à 2, dans lequel l'unité électronique de traitement est programmée pour empêcher des mouvements de parties mobiles de l'appareil (1) lorsque, au cours de l'étape d'inspection, elle a classifié la première image (31) dans le deuxième type.

4. L'appareil selon l'une quelconque des revendications de 1 à 3, dans lequel, au cours de l'étape d'inspection, l'unité électronique de traitement est programmée :
pour comparer des caractéristiques de la première image (31) avec des caractéristiques de référence correspondantes ;
pour, sur la base de cette comparaison, considérer le motif (26) entièrement visible, partiellement visible ou absent dans la première image (31) ;
pour classifier l'image dans l'un de ladite pluralité de types d'images sur la base de la grandeur à laquelle le motif (26) a été considéré visible dans la première image (31).

5. L'appareil selon la revendication 4, dans lequel l'unité électronique de traitement est programmée pour comparer les caractéristiques de la première image (31) avec des caractéristiques de référence correspondantes, pour chacun d'une pluralité de premiers groupes (32) de pixels de la première image (31).

6. L'appareil selon la revendication 5, dans lequel, au cours de l'étape de comparaison en ce qui concerne chaque premier groupe (32), l'unité électronique de traitement est programmée pour vérifier la présence d'un nombre prédéfini de variations de couleur au sein du premier groupe (32) de pixels, et/ou pour vérifier qu'il y a parmi les pixels du premier groupe (32) une différence d'intensité de couleur qui est supérieure à une valeur de référence.

7. L'appareil selon la revendication 5 ou 6, dans lequel les pixels de chaque premier groupe (32) sont sélectionnés adjacents et positionnés au niveau d'une zone de l'image de référence (30) au niveau de laquelle le motif (26) présente au moins une discontinuité (34) d'au moins certaines de ses caractéristiques.

8. L'appareil selon la revendication 5, 6 ou 7, dans lequel les premiers groupes (32) sont prédéfinis et sélectionnés de manière à ce qu'au moins certains d'entre eux partagent une pluralité de pixels.

9. L'appareil selon l'une quelconque des revendications de 4 à 8, dans lequel le motif (26) comprend deux premières zones (27) ayant une première couleur qui sont séparées par une deuxième zone (28) ayant une deuxième couleur, qui s'étendent transversalement à un parcours d'avance allant de la section d'entrée (13) à la chambre d'extraction (3) et qui couvrent toute une largeur de la portion prédéterminée (24), et dans lequel chaque premier groupe (32) de pixels s'étend parallèlement au parcours d'avance et, dans l'image de référence (30), contient une partie de chaque première zone (27) et de la deuxième zone (28).

10. L'appareil selon l'une quelconque des revendications de 1 à 3, dans lequel l'unité électronique de traitement est programmée pour effectuer l'étape d'inspection en comparant directement ou indirectement la première image (31) avec l'image de référence (30).

11. L'appareil selon la revendication 10, dans lequel, au cours de l'étape d'inspection, l'unité électronique de traitement est programmée :
pour comparer des caractéristiques de la première image (31) avec des caractéristiques correspondantes de l'image de référence (30) ;
pour, sur la base de cette comparaison, considérer le motif (26) entièrement visible, partiellement visible ou absent dans la première image (31) ;
pour classifier l'image dans l'un de ladite pluralité de types d'images en fonction de la grandeur à laquelle le motif (26) a été considéré visible dans la première image (31).

12. L'appareil selon la revendication 11, dans lequel l'étape de comparaison entre la première image (31) et l'image de référence (30) est effectuée en comparant chacun d'une pluralité de premiers groupes (32) de pixels de la première image (31) avec un deuxième groupe (33) de pixels de l'image de référence (30), où, pour chaque premier groupe (32), chaque pixel du premier groupe (32) a une position à l'intérieur de la première image (31) qui correspond à la position d'un pixel d'un deuxième groupe (33) correspondant de pixels dans l'image de référence (30), et inversement.

13. L'appareil selon la revendication 12, dans lequel la comparaison entre chaque premier groupe (32) et chaque deuxième groupe (33) est effectuée en attribuant à chacun d'eux un score calculé en utilisant des caractéristiques, respectivement, du premier groupe (32) de pixels et du deuxième groupe (33) de pixels, en comparant entre eux les scores ainsi calculés et en considérant que les deux scores coïncident lorsqu'ils diffèrent de moins d'un écart prédéterminé.

14. L'appareil selon la revendication 12 ou 13, dans lequel les pixels de chaque deuxième groupe (33) sont sélectionnés adjacents et positionnés au niveau d'une zone de l'image de référence (30) au niveau de laquelle le motif (26) présente au moins une discontinuité (34) d'au moins certaines de ses caractéristiques.

15. L'appareil selon la revendication 12, 13 ou 14, dans lequel les deuxièmes groupes (33) sont prédéfinis et sélectionnés de manière à ce qu'au moins certains d'entre eux partagent une pluralité de pixels.

16. L'appareil selon l'une quelconque des revendications de 1 à 15, dans lequel, au cours de l'étape de contrôle, l'unité électronique de traitement est programmée pour démarrer ou pour activer un cycle pour la préparation d'une boisson uniquement lorsqu'elle a classifié, au cours de l'étape de classification, la première image (31) dans le premier type.

17. L'appareil selon l'une quelconque des revendications de 1 à 15, dans lequel, lorsque l'appareil (1) est allumé et dans une condition de veille et/ou prêt à l'emploi, le dispositif d'acquisition d'images (16) acquiert des premières images en continu, à une fréquence prédéterminée, et les envoie à l'unité électronique de traitement, qui, pour chaque première image (31), effectue les étapes d'inspection et de classification, et dans lequel, lorsque l'unité électronique de traitement classifie une première image (31) dans le premier type, au cours de l'étape de contrôle suivante elle fait passer l'appareil (1) dans une condition de prêt à l'emploi et démarre ou active un cycle pour la préparation d'une boisson.

18. L'appareil selon l'une quelconque des revendications de 1 à 16, comprenant également un dispositif de commande qui peut être actionné, directement ou indirectement, par un utilisateur, et dans lequel, lorsque l'appareil (1) est allumé, le dispositif d'acquisition d'images (16) est programmé pour acquérir une ou une pluralité d'images l'une après l'autre à la suite d'une commande d'activation générée par le dispositif de commande.

19. L'appareil selon l'une quelconque des revendications de 1 à 17, dans lequel, lorsqu'elle a classifié, au cours de l'étape de classification, la première image (31) dans le premier type, au cours de l'étape de contrôle suivante, l'unité électronique de traitement est également programmée pour effectuer une étape de reconnaissance de la capsule (4), en utilisant la première image (31) utilisée pour l'étape d'inspection ou une image différente acquise par le dispositif d'acquisition d'images (16), et pour contrôler le fonctionnement de l'appareil (1) en fonction du résultat de l'étape de reconnaissance.
